# EUROPEAN PATENT APPLICATION

(11) **EP 3 748 527 A1**
(43) Date of publication of application: **09.12.2020**
(21) Application number: 19178792.8
(22) Date of filing: 06.06.2019
(51) Int. Cl.: G06F 21/60, G06F 21/57

(54) **MULTIPROCESSOR SYSTEM BEING CONFIGURED FOR COMMUNICATING IN A MOBILE COMMUNICATION NETWORK**

(71) Applicant: Secure Thingz Limited, Trumpington, Cambridge CB2 9FF (GB)
(72) Inventor: SPITZ, Stephan, 85757 Karlsfeld (DE); POVEY, Haydn, Cambridge CB2 9FF (GB)
(74) Representative: Patentship Patentanwaltsgesellschaft mbH

(57) **Abstract**

The invention relates to a multiprocessor system (100) being configured for communicating in a mobile communication network (120). The multiprocessor system (100) comprises: a common processor carrier (101); a first digital processor (103) arranged on the common processor carrier (101); a second digital processor (105) arranged on the common processor carrier (101), wherein the second digital processor (103) comprises a subscriber identity module; and a memory (107) being configured to store a communication profile. The communication profile comprises an authentification information enabling an authentification of the subscriber identity module, wherein the communication profile is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair. The first digital processor (103) is configured to initiate a transmission of the communication profile from the memory (107) to the second digital processor (105). The second digital processor (105) is configured to: receive the communication profile; verify the digital signature of the communication profile using the cryptographic decryption key; and store the communication profile if the digital signature has been successfully verified. Moreover, the invention relates to a corresponding method for handling communications of the multiprocessor system (100) in the mobile communication network (120).

## Description

### TECHNICAL FIELD

The invention relates to secure electronic communication devices, in particular loT devices. More specifically, the invention relates to a multiprocessor system for such an electronic communication device for communicating in a mobile communication network.

### BACKGROUND OF THE INVENTION

Electronic communication devices, such as mobile phones or loT (loT: Internet of things) devices in general, usually include one or more processors configured to execute program code, such as application code, firmware code or the like, for performing different operations, such as processing data and/or communicating with other electronic communication devices in a cellular communication network.

In order to provide an efficient loT device, the processors can be arranged on a common carrier to form a multiprocessor system and can be adapted to perform at least partly different tasks. The multiprocessor systems can be further implemented as embedded systems which can be specifically designed for a certain loT application, such as capturing and transmitting measurement data over a communication network, such as 5G communication network.

For network communications, there is a need to enable a multiprocessor system to communicate over a communication network.

### SUMMARY OF THE INVENTION

It is an object of the invention to securely enable a multiprocessor system to communicate over a mobile communication network.

The foregoing and other objects are achieved by the subject matter of the independent claims. Further implementation forms are apparent from the dependent claims, the description and the figures.

According to a first aspect, the invention relates to a multiprocessor system being configured for communicating in a mobile communication network. The mobile communication network can be a cellular mobile communication network or a non-cellular mobile communication network.

The multiprocessor system comprises a common processor carrier, a first digital processor arranged on the common processor carrier and a second digital processor arranged on the common processor carrier, wherein the second digital processor comprises a subscriber identity module (SIM). Moreover, the multiprocessor system comprises a memory being configured to store a communication profile, wherein the communication profile comprises authentification information, e.g. autentification credentials enabling an authentification of the subscriber identity module, for instance an IMSI (international mobile subscriber identity). The communication profile is digitally signed with a digital signature upon the basis of, i.e. using a cryptographic encryption key, wherein the cryptographic encryption key is associated with a cryptographic decryption key and the cryptographic encryption key and the cryptographic decryption key jointly form an asymmetric cryptographic key pair. The first digital processor is configured to initiate a transmission of the communication profile from the memory to the second digital processor. In turn, the second digital processor is configured to receive the communication profile, verify the digital signature of the communication profile using the cryptographic decryption key and store (and later use) the communication profile if the digital signature has been successfully verified. Thus, an improved multiprocessor system for communicating in a mobile communication networks is provided allowing securely providing a communication profile including authentication information on the multiprocessor system.

In a non-cellular communication scenario the communication profile can contain the authentification information, i.e. credentials for a Wireless LAN, Bluetooth Low Energy, LoRaWAN or any other kind of connectivity. As already mentioned above, in a cellular communication scenario the communication profile can contain an electronic or virtual SIM (eSIM) in that the authentication information comprises a mobile subscriber identity, in particular an IMSI (international mobile subscriber identity) for identifying the subscriber identity module in the cellular communication network.

In an embodiment, the digital signature can be a hash value or an encrypted hash value of the communication profile or a component thereof.

The multiprocessor system can be implemented as a SOC (SOC: System on Chip), in particular as an embedded system.

The operating system program code can form the operating system or at least a function of an operating system or when executed by the second processor.

In order to initiate the transmission of the communication profile, the first processor can either transmit the communication profile to the second digital processor or to trigger the second digital processor to retrieve the communication profile from the memory.

In a further embodiment, the memory is configured to store an executable program code, wherein the executable program code and the communication profile are jointly digitally signed with the digital signature upon the basis of the cryptographic encryption key or wherein the executable program code and the communication profile are jointly digitally signed with a further digital signature upon the basis of a further cryptographic encryption key, wherein the further cryptographic encryption key is associated with a further cryptographic decryption key, wherein the further cryptographic encryption key and the further cryptographic decryption key jointly form a further asymmetric cryptographic key pair, and wherein the first digital processor is configured to verify the digital signature using the cryptographic decryption key or to verify the further digital signature using the further cryptographic decryption key. In an embodiment, the executable program code is an operating system program code defining a configuration or operation of the first digital processor and/or the second digital processor.

In a further embodiment, the first digital processor comprises a secure bootloader, wherein the secure boot loader is configured to verify the integrity of the memory including the communication profile. In an embodiment, the secure bootloader of the first digital processor can comprise a further cryptographic decryption key. The further cryptographic decryption key of the secure bootloader of the first digital processor can be the same key as the cryptographic decryption key of the second digital processor for verifying the digital signature.

In a further embodiment, the first digital processor is configured to initiate the transmission of the communication profile if, in particular only if, the respective digital signature has been successfully verified, and/or to discard the communication profile if the digital signature has not been successfully verified.

In a further embodiment, the second digital processor is configured to discard the communication profile if the digital signature has not been successfully verified.

In a further embodiment, the multiprocessor system forms an loT device, wherein the multiprocessor system comprises a mobile communication interface coupled to the second digital processor, wherein the second digital processor is configured to control the mobile communication interface according to the communication profile for communications in the mobile communication network.

In a further embodiment, the first digital processor is configured to process data to obtain processed data, in particular to process sensor data, and wherein the second digital processor is configured to control the mobile communication interface to transmit the processed data over the communication network, in particular over a 5G communication network, according to the communication profile.

In a further embodiment, the communication profile further comprises an indication of a communication characteristic assigned to the communication profile and/or a security profile, in particular a bandwidth, a time multiplex scheme, a frequency multiplex scheme, for communications over the mobile communication network.

In a further embodiment, the mobile communication interface comprises a communication antenna for communicating over the mobile communication network.

In a further embodiment, the second digital processor is configured to store the communication profile in the subscriber identity module, wherein the subscriber identity module, is implemented in an additional digital secure processor, in particular as an embedded Secure Element (eSE) or embedded SIM (eSIM) circuit. As already mentioned above, in an embodiment the communication profile can be an electronic secure element (eSE) or an electronic SIM (eSIM).

In a further embodiment, the memory is implemented in, i.e. as a component of the first digital processor, wherein the first digital processor is configured to transmit the communication profile towards the second digital processor. According to a further embodiment, the memory is a shared memory implemented on the common processor carrier, wherein the first digital processor is configured to trigger the second digital processor to retrieve the communication profile from the memory in order to initiate the transmission of the communication profile towards the second digital processor.

In a further embodiment, the first digital processor is configured to verify the digital signature of the communication profile using the cryptographic decryption key, and to initiate the transmission of the communication profile if, in particular only if, the digital signature of the communication profile has been successfully verified using the cryptographic decryption key.

In a further embodiment, the multiprocessor system further comprises a communication interface, wherein the communication interface is configured to receive the communication profile and wherein the memory is configured to store the received communication profile.

In a further embodiment, the communication interface is configured to receive the communication profile digitally signed with the digital signature upon the basis of the cryptographic encryption key, wherein the memory is configured to store the received digitally signed communication profile. According to a further embodiment the communication interface is configured to receive the communication profile without a digital signature, wherein the first signal processor is configured to digitally sign the communication profile using the cryptographic encryption key.

In a further embodiment, the first digital processor comprises a processor memory being configured to store the cryptographic encryption key, wherein the first digital processor is configured to digitally sign the communication profile using the cryptographic encryption key stored in the processor memory. According to a variant, the shared memory is configured to store the cryptographic encryption key, wherein the first digital processor is configured to digitally sign the communication profile using the cryptographic encryption key stored in the shared memory.

In a further embodiment, the second digital processor comprises a processor memory being configured to store the cryptographic decryption key. According to a variant, the shared memory is configured to store the cryptographic decryption key.

In a further embodiment, the multiprocessor system further comprising a secure communication link connecting the second digital processor to the memory and/or to the first digital processor, in particular an communication bus, for instance, an Inter-Integrated Circuit bus, wherein the first digital processor is configured to initiate the transmission and/or to transmit the communication profile to the second digital processor via the secure communication link.

In a further embodiment, the communication profile is additionally encrypted with a symmetric cryptographic key, and wherein the memory is configured to additionally store the symmetric cryptographic key encrypted with the cryptographic encryption key; wherein the first digital processor is further configured to initiate a transmission of the digital signature and the encrypted symmetric key to the second digital processor, and wherein the second digital processor is configured to:
- receive the digital signature and the cryptographically encrypted symmetric cryptographic key;
- verify the digital signature using the cryptographic decryption key;
- decrypt the symmetric cryptographic key using the cryptographic decryption key;
- decrypt the communication profile using the symmetric cryptographic key; and
- store the communication profile if the digital signature has been successfully verified.

Thereby, a hybrid cryptographic scheme, in particular a hybrid encryption scheme, is provided.

In an embodiment, the encrypted communication profile is discarded if the decryption of the encrypted communication profile has failed.

In a further embodiment, the first digital processor is configured to transmit a security indication towards the second digital processor, wherein the security indication indicates a security status of the communication profile. The second digital processor can be configured to process the communication profile according to the security status and/or to assign processing resources which are associated with the security status for processing the communication profile. In an embodiment, the security status can be, for instance, a level 1 security status indicating low security requirements or a level 5 security status indicating high security requirements, wherein in the level 5 security status only secure resources, i.e. security enclaves are allowed to process the communication profile. Thus, the security indication allows controlling the secure processing of the communication profile.

In an embodiment, the security indication can be transmitted via the secure communication link, e.g. in form of the system bus architecture in the multiprocessor system, which allows the transmission of the security indication.

In a further embodiment, the first digital processor is configured to digitally encrypt the communication profile before initiating a transmission of the communication profile to the second digital processor upon a basis of a symmetric or asymmetric encryption scheme.

According to a second aspect the invention relates to a method for handling communications of a multiprocessor system in a mobile communication network, wherein the multiprocessor system comprises a common processor carrier, a first digital processor arranged on the common processor carrier and a second digital processor arranged on the common processor carrier, wherein the second digital processor comprises a subscriber identity module. Moreover, the multiprocessor system comprises a memory being configured to store a communication profile of the subscriber identity module, wherein the communication profile comprises an authentification information enabling an authentification of the subscriber identity module in the communication network, wherein the communication profile is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair. The method according to the second aspect of the invention comprises the steps of: initiating a transmission of the communication profile from the memory to the second digital processor by the first digital processor; receiving the communication profile by the second digital processor; verifying the digital signature of the communication profile using the cryptographic decryption key by the second digital processor; and storing the communication profile in the subscriber identity module if the digital signature has been successfully verified. Thus, an improved method for handling communications of a multiprocessor system is provided allowing securely providing a communication profile including authentication information on the multiprocessor system.

The method according to the second aspect of the invention can be performed by the multiprocessor system according to the first aspect of the invention. Further features of the method according to the second aspect of the invention result directly from the functionality of the multiprocessor system according to the first aspect of the invention and its different implementation forms described above and below.

Embodiments of the invention are applicable for multiprocessor systems implemented as electronic communication devices, in particular loT devices, that use wireless communication technology, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

In embodiments of the present invention the electronic communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention the electronic communication devices may include one or more radio interfaces or modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the electronic communication devices may be configured to communicate according to any other additional or alternative modulation scheme. In embodiments of the present invention, the radios may include, or may be associated with, one or more antennas. In one example, an electronic communication device may include a single antenna. In another example, an electronic communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention the processors of the electronic communication device may be configured to perform and/or to trigger, cause, instruct and/or control the electronic communication device to perform, one or more communications, to generate and/or communicate one or more messages and/or transmissions, and/or to perform one or more functionalities, operations and/or procedures. In embodiments of the present invention the processors may include circuitry and/or logic, Media-Access Control (MAC) circuitry and/or logic, Physical Layer (PHY) circuitry and/or logic, and/or any other circuitry and/or logic, configured to perform the functionality of the processors.

In embodiments of the present invention, at least part of the functionality of the processors may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic block diagram of a multiprocessor system according to an embodiment of the invention;
Fig. 2 shows a flow diagram illustrating steps of a method for handling communications in a multiprocessor system according to an embodiment of the invention;
Fig. 3 shows a schematic block diagram of a multiprocessor system according to a further embodiment of the invention; and
Fig. 4 shows a schematic block diagram illustrating processing steps implemented in a multiprocessor system according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

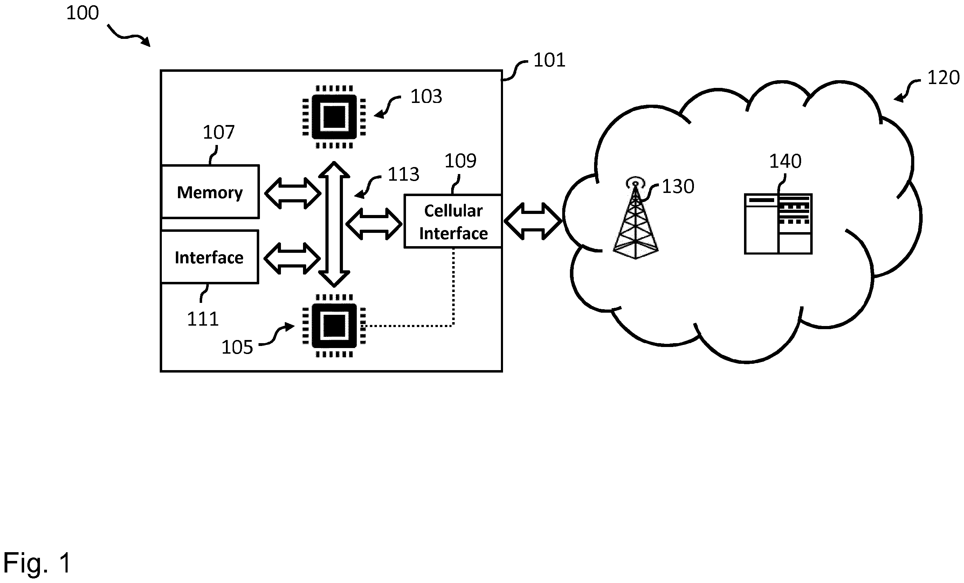

Figure 1 shows a schematic diagram of a multiprocessor system 100 according to an embodiment. In the embodiment shown in figure 1 the multiprocessor system 100 is implemented as an loT device 100 or a part thereof, which is configured for communication in a mobile communication network 120. In the embodiment shown in figure 1 the mobile communication network 120 is implemented as a cellular communication network 120, for instance a cellular communication network based on the 5G standard or a standard evolved therefrom, which can comprise a radio access network 130 including a plurality of base stations and a core network 140 including a plurality of network servers providing different network functions. It will be appreciated, however, that embodiments of the multiprocessor system 100 can be configured to operate in other types of mobile communication networks 120 as well, such as WiFi networks.

As can be taken from figure 1, the multiprocessor system 100 comprises a first digital processor 103 and a second digital processor 105 arranged on a common processor carrier 101. The second digital processor comprises a subscriber identity module (SIM). According to an embodiment, the common processor carrier 101 can be a PCB or another type of physical support providing support for the first digital processor 103 and the second digital processor 105 and/or electronic connections for exchanging data between the first digital processor 103 and the second digital processor 105. In an embodiment, the first digital processor 103 is an application processor 103 of the multiprocessor system 100 and the second digital processor 105 is a communication processor, for instance, a cellular modem or baseband processor of the multiprocessor system 100.

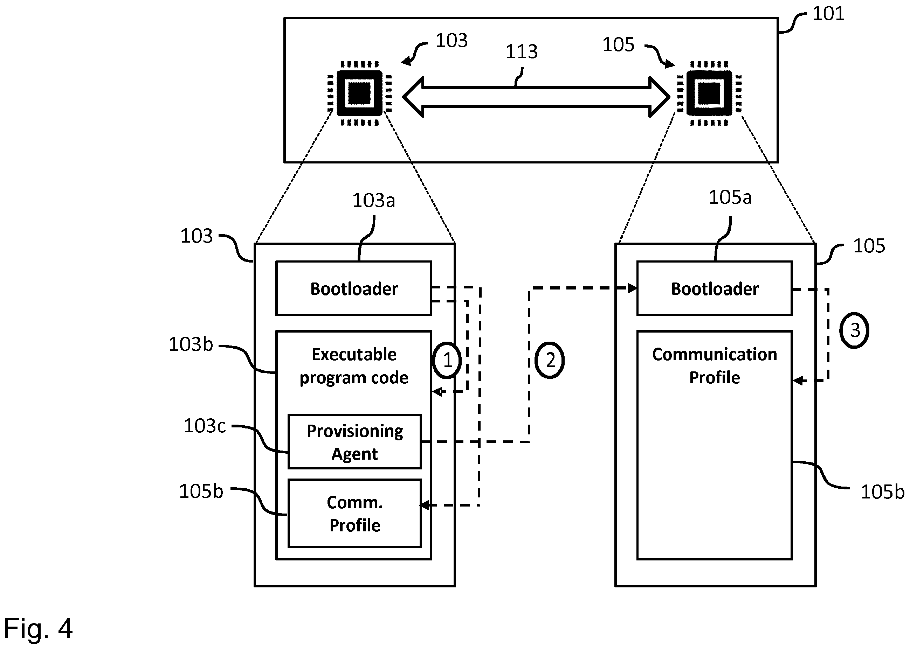

Moreover, the multiprocessor system 100 comprises a memory 107 being configured to store a communication profile 105b (see figure 4), wherein the communication profile 105b comprises authentification information, i.e. autentification or subscription credentials enabling an authentification of the subscriber identity module, for instance an IMSI (international mobile subscriber identity), within the mobile communication network 120. The communication profile 105b is digitally signed with a digital signature upon the basis of, i.e. using a cryptographic encryption key, wherein the cryptographic encryption key is associated with a cryptographic decryption key and the cryptographic encryption key and the cryptographic decryption key jointly form an asymmetric cryptographic key pair, such as public key and a private key of a RSA key pair.

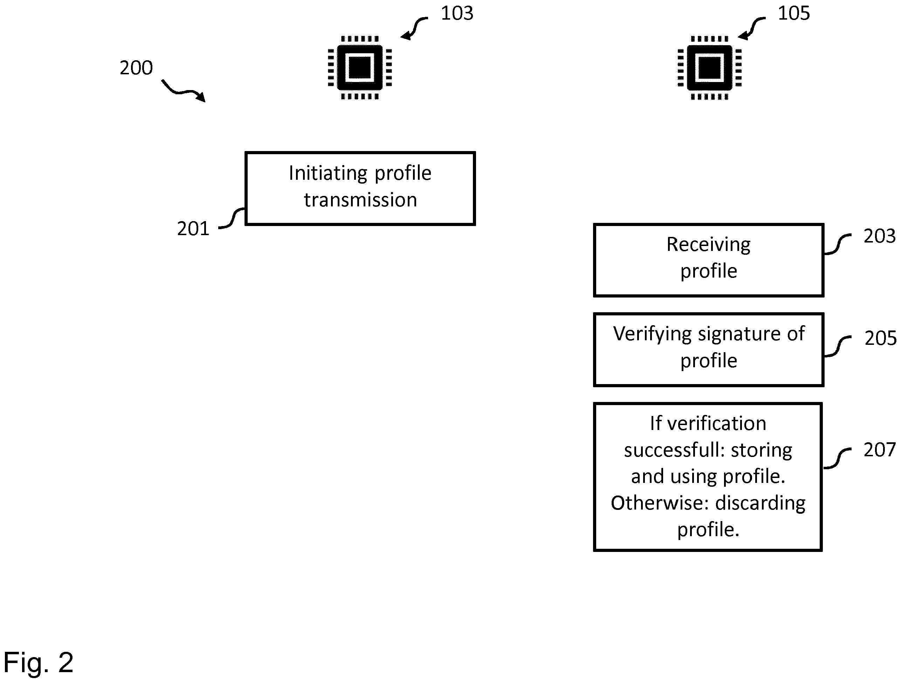

As will be described in more detail below under further reference to figure 2, the first digital processor 103 is configured to initiate a transmission of the communication profile 105b from the memory 107 to the second digital processor 105. In turn, the second digital processor 105 is configured to receive the communication profile 105b, verify the digital signature of the communication profile 105b using the cryptographic decryption key and store (and later use) the communication profile 105b if the digital signature has been successfully verified.

Otherwise, i.e. if the digital signature was not successfully verified, the second digital processor 105 can discard the communication profile 105b.

Figure 2 shows a flow diagram illustrating the steps of a method 200 for handling communications in the multiprocessor system 100 according to an embodiment of the invention. The method 200 comprises a first step 201 of initiating by the first digital processor 103 the transmission of the communication profile 105b from the memory 107 to the second digital processor 105. Moreover, the method 200 comprises the following further steps performed by the second digital processor 105: a step 203 of receiving the communication profile 105b; a step 205 of verifying the digital signature of the communication profile 105b using the cryptographic decryption key; and a step 207 of storing (and using) the communication profile 105b if the digital signature has been successfully verified in order to configure the multiprocessor system 100 with the communication profile 105b. Otherwise, i.e. if the digital signature was not successfully verified, the communication profile 105b can be discarded.

Further embodiments of the multiprocessor system 100 and the method 200 for handling communications in the multiprocessor system 100 will be described in the following with the understanding that features described in the context of further embodiments of the multiprocessor system 100 can be incorporated in further embodiments of the method 200 as well and vice versa, unless explicitly stated otherwise.

In a non-cellular communication scenario the communication profile 105b can contain the authentification information, i.e. credentials for a Wireless LAN, Bluetooth Low Energy, LoRaWAN or any other kind of connectivity. As already mentioned above, in a cellular communication scenario the communication profile 105b can contain an electronic or virtual SIM (eSIM) in that the authentication information comprises a mobile subscriber identity, in particular an IMSI (international mobile subscriber identity) for identifying the subscriber identity module in the cellular communication network 120.

In an embodiment, the digital signature can be a hash value or an encrypted hash value of the communication profile 105b or a component thereof.

In a further embodiment, the memory 107 of the multiprocessor system 100 is configured to store an executable program code 103b (see figure 4), wherein the executable program code 103b and the communication profile 105b are jointly digitally signed with the digital signature upon the basis of the cryptographic encryption key or wherein the executable program code 103b and the communication profile 105b are jointly digitally signed with a further digital signature upon the basis of a further cryptographic encryption key, wherein the further cryptographic encryption key is associated with a further cryptographic decryption key, wherein the further cryptographic encryption key and the further cryptographic decryption key jointly form a further asymmetric cryptographic key pair, and wherein the first digital processor 103 is configured to verify the digital signature using the cryptographic decryption key or to verify the further digital signature using the further cryptographic decryption key.

In an embodiment, the executable program code 103b is an operating system program code defining a configuration or operation of the first digital processor 103 and/or the second digital processor 105.

In a further embodiment, the first digital processor 103 is configured to initiate the transmission of the communication profile 105b if, in particular only if, the respective digital signature of the communication profile 105b has been successfully verified, and/or to discard the communication profile 105b if the digital signature has not been successfully verified by the first digital processor 103.

In a further embodiment, the second digital processor 105 is configured to discard the communication profile 105b if the digital signature has not been successfully verified by the second digital processor 105.

In a further embodiment, the multiprocessor system 100 forms an loT device 100 or is a component thereof, wherein the multiprocessor system 100 comprises a mobile communication interface 107, as illustrated in figure 1, which can be coupled to the second digital processor 105. In an embodiment, the second digital processor 105 is configured to control the mobile communication interface 107 according to the communication profile 105b for communications in the mobile communication network 120.

In a further embodiment, the first digital processor 103 is configured to process data to obtain processed data, in particular to process sensor data, wherein the second digital processor 105 is configured to control the mobile communication interface 107 to transmit the processed data over the mobile, in particular cellular communication network 120 according to the communication profile 105b.

In a further embodiment, the communication profile 105b further comprises an indication of a communication characteristic assigned to the communication profile 105b and/or a security profile, in particular a bandwidth, a time multiplex scheme, a frequency multiplex scheme, for communications over the mobile communication network 120.

In a further embodiment, the mobile communication interface 107 comprises a communication antenna for communicating over the mobile communication network 120.

In a further embodiment, the second digital processor 105 is configured to store the communication profile 105b in the subscriber identity module, wherein the subscriber identity module, is implemented in an additional digital secure processor, in particular as an embedded Secure Element (eSE) or embedded SIM (eSIM) circuit of the second digital processor 105. As already mentioned above, in an embodiment the communication profile 105b can be an electronic secure element (eSE) or an electronic SIM (eSIM).

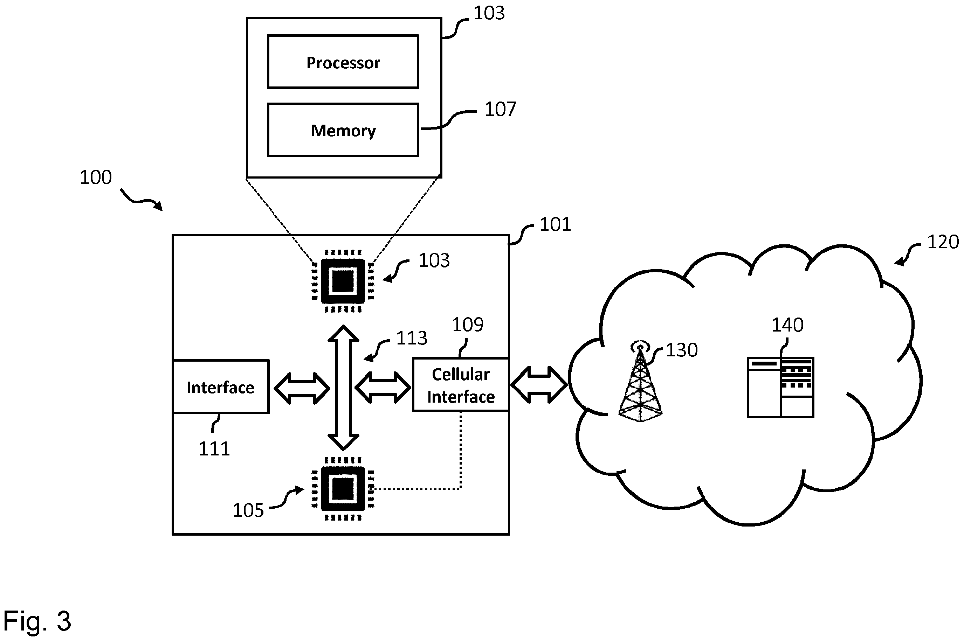

In a further embodiment illustrated in figure 3, the memory 107 is implemented in, i.e. as a component of the first digital processor 103, wherein the first digital processor 103 is configured to directly transmit the communication profile 105b towards the second digital processor 105. According to the embodiment shown in figure 1, the memory 107 is a shared memory implemented on the common processor carrier 101, wherein the first digital processor 103 is configured to trigger the second digital processor 105 to retrieve the communication profile 105b from the shared memory 107 in order to initiate the transmission of the communication profile 105b towards the second digital processor 105.

In a further embodiment, the first digital processor 103 is configured to verify the digital signature of the communication profile 105b using the cryptographic decryption key, and to initiate the transmission of the communication profile 105b if, in particular only if, the digital signature of the communication profile 105b has been successfully verified using the cryptographic decryption key.

In a further embodiment, as illustrated in figures 1 and 3, the multiprocessor system 100 further comprises a wired or wireless communication interface 111, such as a USB interface, wherein the communication interface 111 is configured to initially receive the communication profile 105b and wherein the memory 107 is configured to store the communication profile 105b received via the communication interface 111.

In a further embodiment, the communication interface 111 is configured to receive the communication profile 105b digitally signed with the digital signature upon the basis of the cryptographic encryption key, wherein the memory 107 is configured to store the received digitally signed communication profile 105b. According to a further embodiment the communication interface 111 is configured to receive the communication profile 105b without a digital signature, wherein the first signal processor 103 is configured to digitally sign the communication profile 105b using the cryptographic encryption key.

In a further embodiment, as illustrated in figure 3, the first digital processor 103 comprises a processor memory 107 being configured to store the cryptographic encryption key, wherein the first digital processor 103 is configured to digitally sign the communication profile 105b using the cryptographic encryption key stored in its processor memory 107. According to a variant, the shared memory 107 illustrated in figure 1 is configured to store the cryptographic encryption key, wherein the first digital processor 103 is configured to digitally sign the communication profile 105b using the cryptographic encryption key stored in the shared memory 107.

In a further embodiment, the second digital processor 105 comprises a processor memory being configured to store the cryptographic decryption key. According to a variant, the shared memory 107 illustrated in figure 1 is configured to store the cryptographic decryption key.

In a further embodiment, the multiprocessor system 100 further comprising a secure communication link 113, in particular a communication bus 113 as illustrated in figures 1 and 3, connecting the second digital processor 105 to the memory 107 and/or to the first digital processor 103, for instance, an inter-integrated circuit bus. In an embodiment, the first digital processor 103 is configured to initiate the transmission and/or to transmit the communication profile 105b to the second digital processor 105 via the secure communication link 113.

In a further embodiment, the first digital processor 103 is configured to transmit a security indication towards the second digital processor 105, wherein the security indication indicates a security status of the communication profile 105b. The second digital processor 105 can be configured to process the communication profile 105b according to the security status and/or to assign processing resources which are associated with the security status for processing the communication profile 105b. In an embodiment, the security status can be, for instance, a level 1 security status indicating low security requirements or a level 5 security status indicating high security requirements (as well as corresponding levels in between), wherein in the level 5 security status only secure resources, i.e. security enclaves of the second digital processor 105 are allowed to process the communication profile 105b. Thus, the security indication allows controlling the secure processing of the communication profile 105b.

In an embodiment, the security indication can be transmitted via the secure communication link 113, e.g. in form of the system bus architecture 113 in the multiprocessor system 100, which allows the transmission of the security indication.

In a further embodiment, the first digital processor 103 is configured to digitally encrypt the communication profile 105b before initiating a transmission of the communication profile 105b to the second digital processor 105 upon a basis of a symmetric or asymmetric encryption scheme, such as DSA or RSA.

As will be described in more detail in the following under further reference to figure 4, the first digital processor 103 comprises a secure bootloader 103a, wherein the secure bootloader 103a is configured to verify the integrity of the memory 107 including the communication profile 103a. In an embodiment, the secure bootloader 103a of the first digital processor 103 can comprise a further cryptographic decryption key. The further cryptographic decryption key of the secure bootloader 103a of the first digital processor 103 can be the same key as the cryptographic decryption key of the second digital processor 105 for verifying the digital signature of the communication profile 105b.

According to embodiments of the invention the first digital processor 103 can be implemented as an application processor 103 comprising as communication profile 105b a "pre-provisioned" SIM stack, including authentication information, i.e. subscription credentials for attaching to the cellular communication network 120, and being configured to deploy this "pre-provisioned" SIM stack on the SIM of the second digital processor 105 implemented, for instance, in the form of a cellular modem processor 105 (such as a baseband processor 105). According to an embodiment, this configuration of the cellular modem processor 105 by the application processor 103 can be performed, once the application processor 103 and the cellular modem processor 105 are provided on the common processor carrier 101 of the multiprocessor system 100. i.e. when the multiprocessor system 100, in particular loT device 100 is assembled.

As already described above, for implementing one or more of the embodiments of the multiprocessor system 100 and the method 200 the first and second digital processor 103, 105 can comprise a respective secure bootloader 103a, 105a (as illustrated in figure 4). Thus, according to an embodiment, the secure bootloader 103a of the first digital processor 103 can verify the digital signature of the communication profile 105b and/or the executable program code, e.g. firmware 103b (illustrated as stage 1 in figure 4). According to an embodiment, the executable program code 103b can comprise, i.e. implement a provisioning agent 103c for providing the communication profile 105b to the second digital processor 105. For verifying the digital signature(s) the secure bootloader 103a of the first digital processor 103 can comprise one or two public keys corresponding to the private keys, which have been used for digitally signing the communication profile 105b and the executable program code 103b in the first place, for instance, in the context of the so called "mastering" process in the development toolchain. During the next stage (illustrated as stage 2 in figure 4) the provisioning agent 103c implemented by the first digital processor 103 can deploy the image of the communication profile 105b with the secure bootloader 105a of the second digital processor 105 using the secure communication channel 113 between the first and second digital processor 103, 105. As already described above, the secure channel 113 might be established by physical protection or by applying a cryptographic protocol. In a further stage (illustrated as stage 3 in figure 4) the bootloader 105a of the second digital processor 105 can accept the image of the communication profile 105b, because it has been provided via the secure communication channel 113. In case a cryptographic protocol is used for securing the communication the authentication of the first digital processor 103 to the second digital processor 105 can authorize the loading of the communication profile 105b by the secure bootloader 105a of the second digital processor 105.

According to a variant already described in a more general context above, the provisioning agent 103c implemented by the first digital processor 103 comprises a cryptographic key, which can be used for generating the necessary authentication for the communication profile 105b to be loaded by the secure bootloader 105a of the second digital processor 105. According to this embodiment, the so called "mastering" is done locally with the help of the provisioning agent 103c implemented by the first digital processor 103. According to an embodiment, the first digital processor 103 can be configured to implement the provisioning agent 103c on the basis of the executable program code 103b.

As already described above in a more general context, the interface between the first digital processor 103 and the second digital processor 105 on a physical/protocol layer can be a memory mapped interface. In this embodiment, the memory 107 (as illustrated in figure 1) provides a shared memory space between the first digital processor 103 and the second digital processor 105 with a fixed location for the communication profile 105b. In this case, the secure bootloader 105a of the second digital processor 105 can implement a look-up procedure for the communication profile 105b and boot the communication profile 105b after a reset when the integrity and authentication has been successfully verified.

According to a variant already described above in a more general context, the interface between the first digital processor 103 and the second digital processor 105 on a physical/protocol layer can be a bus e.g. I2C, such as the communication bus 111 illustrated in figure 1, or a local Ethernet or USB Interface which allows the provisioning agent 103c implemented by the first digital processor 103 to actively send the communication profile 105b to the secure bootloader 105a of the second digital processor 105. In this case the secure bootloader 105a of the second digital processor 105 can comprise an integrated communication server implemented for receiving the communication profile 105b and the provisioning agent 103c of the first digital processor 103 can implement a corresponding client. In this embodiment, the secure bootloader 105a of the second digital processor 105 writes the communication profile 105b after it has been received in its own memory and boots it after a reset of the multiprocessor system 100.

As already described above in a more general context, on a logical level the interface between the first digital processor 103 and the second digital processor 105 can be provided by the provisioning agent 103c of the first digital processor 103. In this embodiment, a public key is located in the provisioning agent 103c or alternatively communicated to the provisioning agent 103c by the secure bootloader 105a of the second digital processor 105. The corresponding private key is part of the secure bootloader 105a of the second digital processor 105. The provisioning agent 103c of the first digital processor 103 uses this public key to sign and encrypt the communication profile 105b. Based on the signature with the public key the secure bootloader 105a of the second digital processor 105 will verify the signature with the corresponding private key and, if verified successfully, accept the communication profile 105b and use it.

According to a variant, the interface between the first digital processor 103 and the second digital processor 105 on a logical level can be incorporated in the development toolchain. In this case the public key can be located in the development toolchain. The corresponding private key is part of the secure bootloader 105a of the second digital processor 105. The development toolchain uses this public key to sign and encrypt the communication profile 105b. Thus, in this variant, this functionality is integrated in the development toolchain and not the provisioning agent 103c implemented by the first digital processor 103. Based on the signature with the public key the secure bootloader 105a of the second digital processor 105 will verify the signature with the corresponding private key and, if the verification is successful, accept the communication profile 105b and use it.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. Multiprocessor system (100) being configured for communicating in a mobile communication network (120), the multiprocessor system (100) comprising:
a common processor carrier (101);
a first digital processor (103) arranged on the common processor carrier (101);
a second digital processor (105) arranged on the common processor carrier (101), wherein the second digital processor (103) comprises a subscriber identity module; and
a memory (107) being configured to store a communication profile (105b), the communication profile (105b) comprising an authentification information enabling an authentification of the subscriber identity module, wherein the communication profile (105b) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair;
wherein the first digital processor (103) is configured to initiate a transmission of the communication profile (105b) from the memory (107) to the second digital processor (105);
wherein the second digital processor (105) is configured to:
- receive the communication profile (105b);
- verify the digital signature of the communication profile (105b) using the cryptographic decryption key; and
- store the communication profile (105b) if the digital signature has been successfully verified.

2. Multiprocessor system (100) according to claim 1, wherein the memory (107) is configured to store an executable program code (103b), wherein the executable program code (103b) and the communication profile (105b) are jointly digitally signed with the digital signature upon the basis of a cryptographic encryption key or wherein the executable program code (103b) and the communication profile (105b) are jointly digitally signed with a further digital signature upon the basis of a further cryptographic encryption key, wherein the further cryptographic encryption key is associated with a further cryptographic decryption key, wherein the further cryptographic encryption key and the further cryptographic decryption key jointly form a further asymmetric cryptographic key pair, and wherein the first digital processor (103) is configured to verify the digital signature using the cryptographic decryption key or to verify the further digital signature using the further cryptographic decryption key.

3. Multiprocessor system (100) according to claim 2, wherein the first digital processor (103) is configured to initiate the transmission of the communication profile (105b) if, in particular only if, the respective digital signature has been successfully verified, and/or to discard the communication profile (105b) if the digital signature has not been successfully verified.

4. The multiprocessor system (100) of any one of the preceding claims, wherein the second digital signal processor (105) is configured to discard the communication profile (105b) if the digital signature has not been successfully verified.

5. The multiprocessor system (100) of any one of the preceding claims, wherein the multiprocessor system (100) forms an loT device, wherein the multiprocessor system (100) comprises a mobile communication interface (109) coupled to the second digital processor (105), wherein the second digital processor (105) is configured to control the mobile communication interface (109) according to the communication profile (105b) for communications in the mobile communication network (120).

6. The multiprocessor system (100) of claim 5, wherein the first digital processor (103) is configured to process data to obtain processed data, in particular to process sensor data, and wherein the second digital processor (105) is configured to control the mobile communication interface (109) to transmit the processed data over the mobile communication network (120), in particular over a 5G cellular communication network (120), according to the communication profile (105b).

7. The multiprocessor system (100) of claim 5 or 6, wherein the communication profile (105b) further comprises an indication of a communication characteristic assigned to the communication profile (105b) and/or a security profile, in particular a bandwidth, a time multiplex scheme, a frequency multiplex scheme, for communications over the mobile communication network (120).

8. The multiprocessor system (100) of claim 5, 6 or 7, wherein the mobile communication interface (109) comprises a communication antenna for communicating over the mobile communication network (120).

9. The multiprocessor system (100) of any one of the preceding claims, wherein the second digital processor (105) is configured to store the communication profile (105b) in the subscriber identity module, wherein the subscriber identity module, is implemented in an additional digital secure processor, in particular as an embedded Secure Element (eSE) or embedded SIM (eSIM) circuit.

10. The multiprocessor system (100) of any one of the preceding claims, wherein the memory (107) is implemented in the first digital processor (103) and wherein the first digital processor (103) is configured to transmit the communication profile (105b) towards the second digital processor (105), or wherein the memory (107) is a shared memory implemented on the common processor carrier (101), and wherein the first digital processor (103) is configured to trigger the second digital processor (105) to retrieve the communication profile (105b) from the memory (107) in order to initiate the transmission of the communication profile (105b) towards the second digital processor (105).

11. The multiprocessor system (100) of any one of the preceding claims, wherein the first digital processor (103) is configured to verify the digital signature of the communication profile (105b) using the decryption key, and to initiate the transmission of the communication profile (105b) if, in particular only if, the digital signature of the communication profile (105b) has been successfully verified using the decryption key.

12. The multiprocessor system (100) of any one of the preceding claims, further comprising a communication interface (111), the communication interface (111) being configured to receive the communication profile (105b), wherein the memory (107) is configured to store the received communication profile (105b).

13. The multiprocessor system (100) of claim 10, wherein the communication interface (111) is configured to receive the communication profile (105b) digitally signed with the digital signature upon the basis of the encryption key, and wherein the memory (107) is configured to store the received digitally signed communication profile (105b), or wherein the communication interface (111) is configured to receive the communication profile (105b) without a digital signature, and wherein the first digital processor (103) is configured to digitally sign the communication profile (105b) using the encryption key.

14. The multiprocessor system (100) of any one of the preceding claims, wherein the first digital processor (103) comprises a processor memory being configured to store the digital encryption key or wherein the memory (107) is configured to store the digital encryption key, and wherein the first digital processor (103) is configured to digitally sign the communication profile (105b) using the digital encryption key.

15. The multiprocessor system (100) of any one of the preceding claims, wherein the second digital processor (105) comprises a processor memory being configured to store the digital decryption key or wherein the memory (107) is configured to store the digital decryption key.

16. The multiprocessor system (100) of any one of the preceding claims, further comprising a secure communication link (113), in particular a communication bus (113), connecting the second digital processor (105) to the memory (107) and/or to the first digital processor (103), wherein the first digital processor (103) is configured to initiate the transmission and/or to transmit the communication profile (105b) to the second digital processor (105) via the secure communication link (113).

17. The multiprocessor system (100) of any one of the preceding claims, wherein the communication profile (105b) is additionally encrypted with a symmetric cryptographic key, and wherein the memory (107) is configured to additionally store the symmetric cryptographic key encrypted with the cryptographic encryption key; wherein the first digital processor is further configured to initiate a transmission of the digital signature and the encrypted symmetric key to the second digital processor, and wherein the second digital processor is configured to:
- receive the digital signature and the cryptographically encrypted symmetric cryptographic key;
- verify the digital signature using the cryptographic decryption key;
- decrypt the symmetric cryptographic key using the cryptographic decryption key;
- decrypt the communication profile (105b) using the symmetric cryptographic key; and
- store the communication profile (105b) if the digital signature has been successfully verified.

18. The multiprocessor system (100) of any one of the preceding claims, wherein the first digital processor (103) is configured to transmit a security indication towards the second digital processor (105), the security indication indicating a security status of the communication profile (105b), and wherein the second digital processor (105) is configured to process the communication profile (105b) according to the security status, and/or to assign processing resources which are associated with the security status for processing the communication profile (105b).

19. The multiprocessor system (100) of any one of the preceding claims, wherein the first digital processor (103) is configured to digitally encrypt the communication profile (105b) before initiating a transmission of the communication profile (105b) to the second digital processor (105) on the basis of a symmetric or asymmetric encryption scheme.

20. Method (200) for handling communications of a multiprocessor system (100) in a mobile communication network (120), the multiprocessor system (100) comprising a common processor carrier (101), a first digital processor (103) arranged on the common processor carrier (101), a second digital processor (105) arranged on the common processor carrier (101), wherein the second digital processor (105) comprises a subscriber identity module, a memory (107) being configured to store a communication profile (105b) of the subscriber identity module, the communication profile (105b) comprising an authentification information enabling an authentification of the subscriber identity module in the mobile communication network (120), wherein the communication profile (105b) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair, wherein the method (200) comprises:
initiating (201) a transmission of the communication profile (105b) from the memory (107) to the second digital processor (105) by the first digital processor (103);
receiving (203) the communication profile (105b) by the second digital processor (105);
verifying (205) the digital signature of the communication profile (105b) using the cryptographic decryption key by the second digital processor (105); and
storing (207) the communication profile (105b) in the subscriber identity module if the digital signature has been successfully verified.
